# EUROPEAN PATENT SPECIFICATION

(11) **EP 3 637 758 B1**
(45) Date of publication and mention of the grant of the patent: **04.09.2024**
(21) Application number: 18813633.7
(22) Date of filing: 24.05.2018
(51) Int. Cl.: G06V 20/58, H04N 23/90, H04N 13/239, H04N 13/286, H04N 13/289, H04N 13/296, H04N 23/71, H04N 23/72, G03B 7/091, G08G 1/0962

(54) **IMAGE PROCESSING DEVICE**
BILDVERARBEITUNGSVORRICHTUNG
DISPOSITIF DE TRAITEMENT D'IMAGES

(30) Priority: 07.06.2017 JP 2017112877
(43) Date of publication of application: 15.04.2020
(73) Proprietor: Hitachi Astemo, Ltd., Hitachinaka-shi, Ibaraki 312-8503 (JP)
(72) Inventor: MATONO, Haruki, Hitachinaka-shi Ibaraki 312-8503 (JP); ENDO, Takeshi, Tokyo 100-8280 (JP); NAGASAKI, Takeshi, Hitachinaka-shi Ibaraki 312-8503 (JP); SHIINA, Yuhi, Hitachinaka-shi Ibaraki 312-8503 (JP)
(74) Representative: Strehl Schübel-Hopf & Partner
(86) International application number: PCT/JP2018/019943
(87) International publication number: WO 2018/225516

(56) References cited:
- EP-A1- 3 089 442
- JP-A- 2008 262 467
- JP-A- 2012 019 311
- JP-A- 2015 177 258
- JP-A- 2015 177 258
- JP-A- 2016 032 255
- US-A1- 2006 140 510
- US-A1- 2014 055 572
- US-A1- 2014 232 830
- US-A1- 2015 341 620
- US-A1- 2015 371 097

## Description

### Technical Field

The present invention relates to an image processing device that is mounted on a vehicle and controls an imaging device capable of capturing an image of surroundings.

### Background Art

An image processing device that is mounted on a vehicle and calculates a distance from the vehicle to an object by, for example, triangulation based on an image that results from imaging the outside of the vehicle with a pair of imaging devices is conventionally known. Further, it is known that such an image processing device performs various types of processing based on a captured image, such as processing of recognizing an object included in the captured image. Further, the processing of calculating the distance from the vehicle to the object to be performed by the image processing device corresponds to processing based on images (disparity images) captured by two imaging devices (hereinafter, referred to as "stereo processing"), but also corresponds to processing that can be performed based on an image captured by one imaging device such as processing of recognizing the object (hereinafter, referred to as "monocular processing").

JP 2011-30123 A discloses an invention that includes two imaging units including a first imaging unit and a second imaging unit, has a monocular mode in which only one of the imaging units captures an image and a stereo mode in which the two imaging units capture images, and brings a state of the imaging units in the stereo mode closer to a state of the image unit in the monocular mode when switching from the monocular mode to the stereo mode.

The document JP-A-2015 177258 discloses an image processing device configured to generate high-dynamic-range images by combining individual images taken with different exposure times. The document EP-A-3 089 442 discloses an vehicle where images of two cameras are combined to eliminate the effect of flickering LED signs. Further related art is disclosed in US-A-2015/371097 US-A-2015/341620, US-A-2014/055572, US-A-2014/232830 and US-A-2006/140510.
The document JP 2016-032255 A discloses an image processing device according to the preamble of claim 1.

### Citation List

### Patent Literature

PTL 1:JP 2011-30123 A

### Summary of Invention

### Technical Problem

The invention disclosed in JP 2011-30123 A is configured to bring the state of the imaging units in the stereo mode closer to the state of the imaging unit in the monocular mode to allow a stereoscopic image to be smoothly obtained when switching from the monocular mode to the stereo mode, but is not intended to consider another processing based on the image captured in the monocular mode or the stereo mode at all.

For example, as processing in an on-vehicle image processing device, processing of recognizing a road sign from a captured image is conceivable, but recent road signs are diversified, for example, not only a signboard sign made of a board to which paint is applied, but also a sign internally illuminated are known. For example, when an image of the sign internally illuminated is captured under imaging conditions suitable for recognition of the signboard sign, the sign internally illuminated is too bright and causes blown-out highlights to appear in the captured image, which may become a problem that prevents the sign internally illuminated from being recognized. On the other hand, under imaging conditions suitable for recognition of the sign internally illuminated, the signboard sign or an object to which the distance from the vehicle is calculated by the stereo processing appears as blocked up shadows, which may become a problem that prevents such a sign from being recognized.

Further, in the on-vehicle image processing device, a plurality of recognition applications for recognizing an object (for example, a three-dimensional object, a vehicle, a pedestrian, or the like) other than the above road signs from the captured image are implemented and executed. Therefore, when configuring a road sign recognition application, it is required that consideration be given to ensure that the processing of the road sign recognition application does not disturb the processing of another recognition application and the configuration be set to make the road sign recognition application compatible with all recognition applications. At that time, it is also important to shorten the time required for the processing, so as to be able to deal with even a situation where the vehicle speed is high.

That is, conventionally, there is a problem that, in the on-vehicle image processing device, no consideration is given at all to particularly a configuration where a plurality of applications such as an application that performs the stereo processing and an application that performs the monocular processing are made executable without exerting a bad influence on other applications and a configuration where the processing of recognizing various objects different in brightness is performed fast in accordance with the travel of the vehicle.

It is an object of the present invention is to provide an image processing device capable of obtaining a captured image in which various objects different in brightness can be recognized without exerting a bad influence on other applications.

### Solution to Problem

In order to achieve the above object, the present invention proposes an image processing device according to claim 1.

### Advantageous Effects of Invention

According to the present invention, it is possible to provide the image processing device capable of obtaining a captured image in which various objects different in brightness can be recognized without exerting a bad influence on other applications.

Problems, configurations, and effects other than those described above will be apparent from the description of the embodiments given below.

### Brief Description of Drawings

[FIG. 1] FIG. 1 is a block diagram of an image processing device 1 according to a first embodiment of the present invention.
[FIG. 2] FIG. 2 is a diagram for describing types and imaging timings of images captured by a first imaging unit 100 and a second imaging unit 101 of the image processing device 1 illustrated in FIG. 1.
[FIG. 3] FIG. 3(a) is a front view of an example of an electric sign, and FIG. 3(b) is a diagram illustrating an example of a captured image that results from imaging the sign illustrated in FIG. 3(a) in a short exposure time.
[FIG. 4] FIG. 4 is a flowchart of processing to be performed by the image processing device 1 illustrated in FIG. 1.
[FIG. 5] FIG. 5 is a block diagram of an image processing device 2 according to a second embodiment of the present invention.
[FIG. 6] FIG. 6 is a block diagram of an image processing device 3 according to a third embodiment of the present invention.
[FIG. 7] FIG. 7 is a block diagram of an image processing device 4 according to a fourth embodiment of the present invention.
[FIG. 8] FIG. 8 is a diagram illustrating examples of imaging timings of captured images to be used for stereo processing and imaging timings of captured images to be used for road sign recognition processing when a calculation result from a travel distance calculation unit 503 is equal to or less than a predetermined amount according the fourth embodiment.
[FIG. 9] FIG. 9 is a diagram illustrating examples, different from the examples illustrated in FIG, 8, of the imaging timings of captured images to be used for the stereo processing and the imaging timings of captured images to be used for the road sign recognition processing when the calculation result from the travel distance calculation unit 503 is equal to or less than the predetermined amount according the fourth embodiment.

### Description of Embodiments

Hereinafter, a description will be given of embodiments of the present invention with reference to the accompanying drawings. Although the accompanying drawings and the following description represent specific embodiments in accordance with the principles of the present invention, the drawings and the description are given to facilitate understanding of the present invention and are not intended at all to cause the present invention to be restrictively interpreted.

### First embodiment

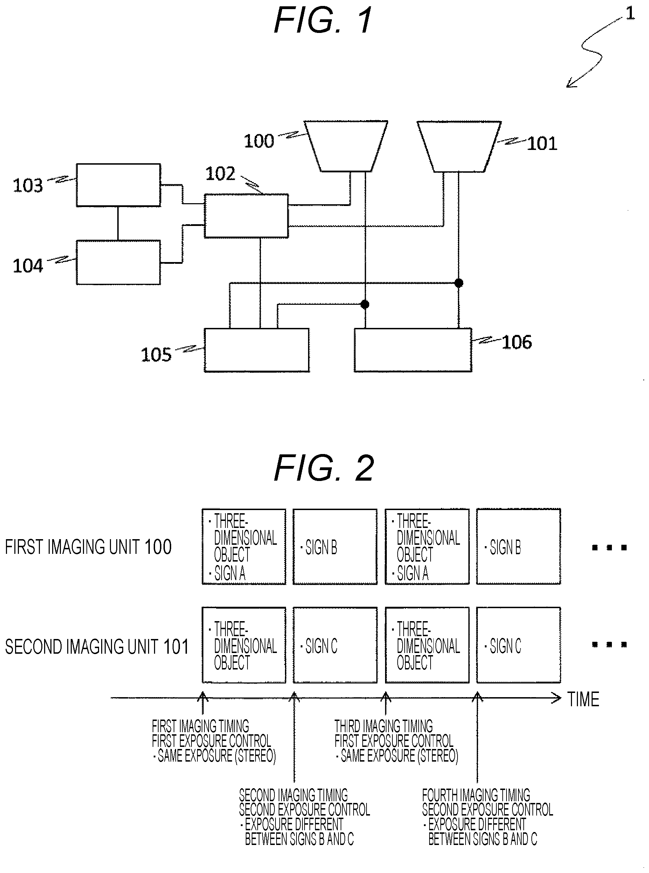

FIG. 1 is a block diagram of an image processing device 1 according to a first embodiment of the present invention.

A description will be given of the present embodiment with reference to an example where the image processing device 1 serves as a device that includes a first imaging unit 100 and a second imaging unit 101 that serve as cameras mounted at the front of a vehicle (not illustrated) and is configured to monitor an obstacle and road conditions ahead of the vehicle. Examples of the obstacle ahead of the vehicle include vehicles and pedestrians, and signals and road signs as the road conditions.

The image processing device 1 includes a pair of the first imaging unit 100 and the second imaging unit 101 that are arranged side-by-side and each configured to capture an image of an area ahead of the vehicle, a first exposure control unit 103 and a second exposure control unit 104 configured to perform exposure control when the first imaging unit 100 or the second imaging unit 101 captures an image, an exposure control switching unit 102 configured to switch between performing exposure control of the first imaging unit 100 or the second imaging unit 101 by means of the first exposure control unit 103 and by means of the second exposure control unit 104, a monocular image processing unit 105 configured to perform monocular processing, and a stereo image processing unit 106 configured to perform stereo processing. Note that the image processing device 1 includes an external interface (IF) to be used for communication with another external device, but the external interface is not illustrated.

Each of the first imaging unit 100 and the second imaging unit 101 is a camera module that includes a lens (not illustrated), a complementary metal-oxide-semiconductor (CMOS) sensor circuit, and the like and is capable of converting received light into an electric signal and outputting the electric signal. Note that each of the first imaging unit 100 and the second imaging unit 101 may include a charge-coupled device (CCD) sensor circuit. A disparity image can be captured by the first imaging unit 100 and the second imaging unit 101.

Each of the first exposure control unit 103 and the second exposure control unit 104 calculates exposure control information to be set for each of the first imaging unit 100 and the second imaging unit 101. The exposure control switching unit 102 determines whether to set the exposure control information calculated by the first exposure control unit 103 or the exposure control information calculated by the second exposure control unit 104. Such exposure control information is information that defines a control amount of exposure control of the first imaging unit 100 or the second imaging unit 101. Further, according to the present embodiment, an exposure time (i.e., a shutter speed) is used as the control amount of exposure control. However, the present invention is not limited to a configuration where the exposure time is used as the control amount of exposure control, and is applicable to a configuration where a gain by which an output from the first imaging unit 100 or the second imaging unit 101 is amplified is used as the control amount of exposure control, a configuration where an f-number at the time of imaging is used as the control amount of exposure control, and a configuration where an ISO sensitivity at the time of imaging is used as the control amount of exposure control. Alternatively, as a lens through which light incident on the first imaging unit 100 or the second imaging unit 101 passes, for example, a lens made of an electrochromic material whose color can be changed through application of an electric current is adopted, and light transmittance of this lens may be used as the control amount of exposure control. Further, the control amount of exposure control may be any other control amount based on which luminance of a captured image can be adjusted. Furthermore, the control amount of exposure control may be any combination of the exemplified control amounts.

The monocular image processing unit 105 performs monocular processing such as detection and recognition of a road sign, and image processing for exposure control.

The stereo image processing unit 106 performs stereo processing such as processing of estimating a three-dimensional object or a road surface shape from three-dimensional coordinates. A description will be given of the present embodiment with reference to a case where the stereo processing to be performed by the stereo image processing unit 106 corresponds to three-dimensional object detection processing based on stereo image processing, that is, processing of detecting an obstacle ahead of the vehicle.

In the stereo image processing to be performed by the stereo image processing unit 106, pieces of image data obtained from the first imaging unit 100 and the second imaging unit 101 are image-converted using calibration parameters calculated in advance, and a corresponding point of each image (corresponding points of the image captured by the first imaging unit 100 and the image captured by the second imaging unit 101) is obtained from the image that is a result of the conversion (captured image), allowing three-dimensional information to be acquired.

Here, to obtain the corresponding point of each image, it is important that the pieces of image data obtained from both the first imaging unit 100 and the second imaging unit 101 be captured at the same time. In order to calculate a difference between the corresponding points of the images, that is, a distance based on the disparity, a difference in time results in a difference in corresponding position, which in turn prevents the distance from being measured correctly.

Therefore, the first exposure control unit 103 controls the first imaging unit 100 and the second imaging unit 101 to cause the first imaging unit 100 and the second imaging unit 101 to perform exposure operation at the same timing. In order to detect an obstacle, the stereo image processing unit 106 groups objects that have a plane perpendicular to a road and are equivalent in size to a vehicle or pedestrian based on the three-dimensional information to detect an obstacle.

FIG. 2 is a diagram for describing types and imaging timings of images captured by the first imaging unit 100 and the second imaging unit 101 of the image processing device 1 illustrated in FIG. 1, in which a horizontal axis is a time axis.

Road signs to be imaged by the first imaging unit 100 or the second imaging unit 101 include three types of road signs different in brightness to be described later in detail. Accordingly, it is desirable that the image processing device 1 be capable of recognize all of the three types of road signs different in brightness from captured images through road sign recognition processing to be performed by the monocular image processing unit 105. Note that, in the present embodiment, a description will be given of processing of recognizing each of the three types of road signs different in brightness from captured images, but the present invention is not limited to such processing and may be applied to processing of recognizing objects other than the road signs.

In order to obtain captured images in which the three types of road signs different in brightness can be recognized, it is required that the first imaging unit 100 and the second imaging unit 101 capture images using different control amounts of exposure control. On the other hand, for the stereo processing, the image captured by the first imaging unit 100 and the image captured by the second imaging unit 101 need to be images captured using the same control amount of exposure control. This is because the corresponding points described above cannot be obtained correctly from images captured using different control amounts of exposure control.

Therefore, conventionally, from the images captured by the first imaging unit 100 and the second imaging unit 101 using the same control amount of exposure control necessary for the stereo processing, the road sign recognition processing fails to recognize the three types of road signs different in brightness, and conversely, from the images captured by the first imaging unit 100 and the second imaging unit 101 using different control amounts of exposure control necessary for the road sign recognition processing, the stereo processing fails to be correctly performed, causing the road sign recognition processing and the stereo processing to exert a bad influence on each other, which in turn makes both the road sign recognition processing and the stereo processing incompatible.

To address this problem, according to the present embodiment, a timing at which the image to be used for the stereo processing is captured and a timing at which the image to be used for the road sign recognition processing is captured are defined for each of the imaging timings of the first imaging unit 100 and the second imaging unit 101. Further, according to the present embodiment, from a time when the image to be used for the stereo processing is captured to a time when the stereo processing using the captured image is completed, it is not necessary to capture an image to be used for the next stereo image. During that period, the image to be used for the road sign recognition processing is captured, and when the stereo processing is completed, the image to be used for the next stereo processing is captured. This makes it possible to capture the image to be used for the road sign recognition processing without exerting a bad influence on the stereo processing. Note that, even after the image to be used for the stereo processing is captured and then the stereo processing is completed, when enough time is left before the next stereo processing is performed, the image to be used for the road sign recognition processing may be captured during that period.

FIG. 2 shows the imaging timings of captured images to be used for the stereo processing and the imaging timings of captured image to be for the road sign recognition processing. In FIG. 2, "three-dimensional object" shown in a frame corresponds to a captured image to be for the stereo processing, "sign A" shown in a frame corresponds to a captured image to be used for the road sign recognition processing in which the sign A out of the three types of road signs difference in brightness is recognized, "sign B" shown in a frame corresponds to a captured image to be for the road sign recognition processing in which the sign B out of the three types of road signs difference in brightness is recognized, and "sign C" shown in a frame corresponds to a captured image to be used for the road sign recognition processing in which the sign C out of the three types of road signs difference in brightness is recognized.

A first imaging timing is an imaging timing of a captured image to be used for the stereo processing and the road sign recognition processing. At this first imaging timing, the first exposure control unit 103 performs exposure control (hereinafter referred to as "first exposure control") to cause the first imaging unit 100 and the second imaging unit 101 to capture images using the same control amount of exposure control that is a first control amount. The image captured by the first imaging unit 100 and the image captured by the second imaging unit 101 are used for the stereo processing, and the image capture by the first imaging unit 100 is used for the road sign recognition processing.

A second imaging timing subsequent to the first imaging timing is an imaging timing of a captured image to be used for the road sign recognition processing. At this second imaging timing, the second exposure control unit 104 performs exposure control (hereinafter referred to as "second exposure control") to cause the first imaging unit 100 to capture an image using a control amount of exposure control that is a second control amount and cause the second imaging unit 101 to capture an image using a control amount of exposure control that is a third control amount. The image captured by the first imaging unit 100 and the image captured by the second imaging unit 101 are used for the road sign recognition processing.

A third imaging timing subsequent to the second imaging timing is an imaging timing of a captured image to be used for the stereo processing and the road sign recognition processing. At this third imaging timing, images are captured under the first exposure control in the same manner as the images captured at the first imaging timing. A fourth imaging timing subsequent to the third imaging timing is an imaging timing of a captured image to be used for the road sign recognition processing. At this fourth imaging timing, images are captured under the second exposure control in the same manner as the images captured at the second imaging timing. Subsequently, the same processing is repeated at the third imaging timing and the fourth imaging timing to cause images to be continuously captured.

A description will be given below of the three types of road signs different in brightness. The three types of road signs different in brightness include a signboard sign, an electric sign, and a sign internally illuminated by a fluorescent lamp or an LED (internally illuminated sign). According to the present embodiment, exposure control is performed to capture images in which the signboard sign, the electric sign, and the sign internally illuminated can be recognized.

The signboard sign is a reflective sign made of a board to which paint is applied and greatly varies in brightness depending on brightness of surroundings and a degree to which light from headlights of a vehicle strikes. Depending on headlights of a vehicle and a position of the signboard sign, it is very dark at night, so that it is desirable that exposure continue for as long as possible to capture an image with high luminance.

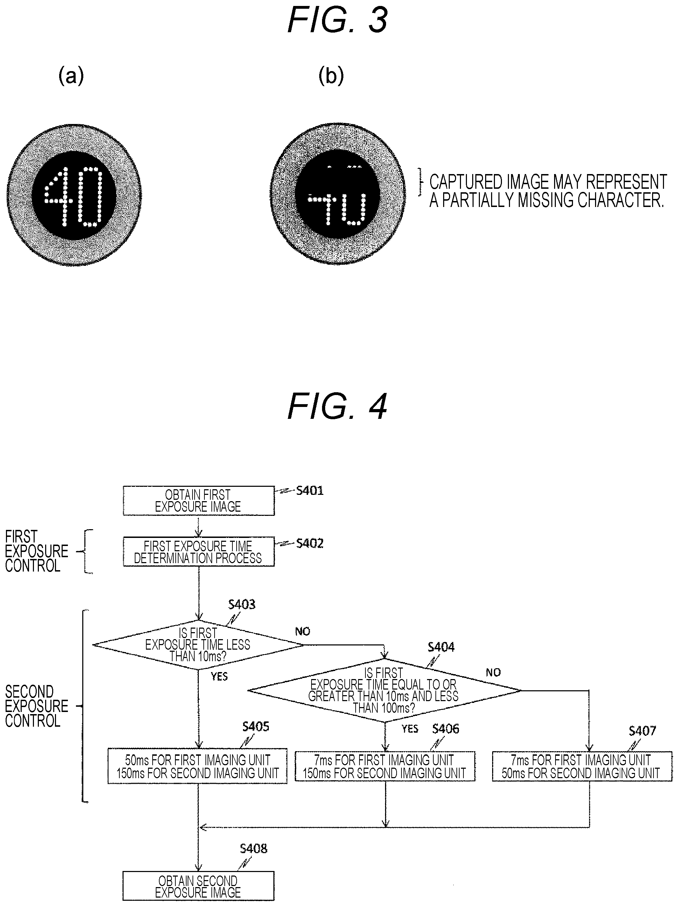

The electric sign is a self-luminous sign that displays a character, a figure, or the like by causing a plurality of light sources (for example, LED light sources) arranged in a grid pattern to blink as needed. The electric sign will be described with reference to FIG. 3. FIG. 3(a) is a front view of an example of the electric sign. FIG. 3(b) is a diagram illustrating an example of a captured image that results from imaging the sign illustrated in FIG. 3(a) in a short exposure time. The electric sign illustrated in FIG. 3(a) is a regulatory sign indicating that a section has a maximum speed of 40 km, and a numeral "40" is displayed by the LED light sources. The LED light sources looks continuously lit up but, in many cases, blink at such a high speed that human eyes cannot distinguish. Accordingly, an exposure time shorter than a certain threshold may result in a captured image representing a partially missing character as illustrated in FIG. 3(b). This is because when the exposure time in which the CMOS sensor circuit of the first imaging unit 100 or the second imaging unit 101 accumulates light is too short and shorter than a blink interval of the character on the electric sign, the captured image represents a state where the electric sign is off. This is called a flicker phenomenon. Therefore, it is required that exposure be kept for a time equal to or longer than a certain level in order to capture an image from which the character on the electric sign can be identified.

A sign internally illuminated (internally illuminated sign) is a self-luminous sign that is made of a translucent board on which a character or a figure is painted and is illuminated by a light source (for example, an LED, a fluorescent lamp, or the like) installed in the sign to become highly visible even at night. However, at night, the sign is highly illuminated compared to the brightness of the surroundings, causing the sign to be imaged with high luminance compared to a pedestrian or a vehicle. When the sign is excessively bright compared to a pedestrian or a vehicle, brightness of the sign portion exceeds the maximum allowable value of the CMOS sensor circuit of the first imaging unit 100 or the second imaging unit 101, causing a so-called blown-out highlights to appear. The blown-out highlights causes a pattern to disappear, disabling the road sign recognition processing to identify the pattern.

From the above, according to the present embodiment, control is performed with the signboard sign, the electric sign, and the sign internally illuminated each corresponding to any one of the signs A, B, and C illustrated in FIG. 2, and, even when any one of the three types of road signs different in brightness appears while the vehicle is traveling, a necessary image is captured in the shortest time to enable recognition of the road sign.

Next, a description will be given of how to determine the control amount of exposure control of each of the signs A, B, and C illustrated in FIG. 2 with reference to FIG. 4. FIG. 4 is a flowchart of processing to be performed by the image processing device 1 illustrated in FIG. 1. A description will be given below of an example where the control amount of exposure control is an exposure time.

First, the exposure control switching unit 102 performs switching to cause the first exposure control unit 103 to perform exposure control of the first imaging unit 100 and the second imaging unit 101. The first exposure control unit 103 performs the exposure control (first exposure control) of the first imaging unit 100 and the second imaging unit 101 using a predetermined exposure time (first control amount) to capture an image (step S401). This imaging corresponds to imaging at the first imaging timing shown in FIG. 2.

The exposure time to be used in step S401 may be determined based on a measurement result of measuring brightness of the outside of the vehicle using, for example, one or a combination of an exposure meter, a luminance meter, and an illuminance meter (not illustrated) or may be changed whenever the brightness of the outside changes. Note that, according to an embodiment different from the present embodiment, the exposure time to be used in step S401 may be a predetermined fixed value.

The stereo image processing unit 106 performs the stereo processing using the image captured by the first imaging unit 100 and the image captured by the second imaging unit 101 in step S401.

The monocular image processing unit 105 performs the monocular processing of recognizing "sign A" illustrated in FIG. 2 from the image captured by the first imaging unit 100 in step S401.

As the first exposure control, the first exposure control unit 103 calculates and determines a control amount of the next exposure control to be performed by the first exposure control unit 103 based on the image captured by the first imaging unit 100 and the image captured by the second imaging unit 101 in step S401 (step S402). For example, such control is performed in this step S402 that, based on the image captured by the first imaging unit 100 and the image captured by the second imaging unit 101 in step S401, a distribution of a luminance image of the whole images is calculated, the larger the number of pixels having luminance higher than the predetermined threshold is, the smaller the control amount is made (the shorter the exposure time is made), and the larger the number of pixels having luminance lower than the predetermined threshold is, the larger the control amount is made (the longer the exposure time is made). The threshold to be used to make the control amount smaller and the threshold to be used to make the control amount larger may be the same or different from each other. For example, such control is performed that, when the control amount of exposure control is a gain by which the output from the first imaging unit 100 or the second imaging unit 101 is amplified, the larger the number of pixels having luminance higher than the predetermined threshold is, the smaller the gain is made, and the larger the number of pixels having luminance lower than the predetermined threshold is, the larger the gain is made. For example, such control is performed that, when the control amount of exposure control is an f-number at the time of imaging, the larger the number of pixels having luminance higher than the predetermined threshold is, the larger the f-number is made, and the larger the number of pixels having luminance lower than the predetermined threshold is, the smaller the f-number is made. For example, such control is performed that, when the control amount of exposure control is an ISO sensitivity at the time of imaging, the larger the number of pixels having luminance higher than the predetermined threshold is, the lower the ISO sensitivity is made, and the larger the number of pixels having luminance lower than the predetermined threshold is, the higher the ISO sensitivity is made. For example, such control is performed that, when the control amount of exposure control is light transmittance of the lens, the larger the number of pixels having luminance higher than the predetermined threshold is, the lower the light transmittance of the lens is made, and the larger the number of pixels having luminance lower than the predetermined threshold is, the higher the light transmittance of the lens is made.

Subsequently, the second exposure control is performed in step S403 and subsequent steps. The second exposure control unit 104 determines the control amount (exposure time) of exposure control such that three types of exposure times including the exposure time used in step S401, the exposure time of the first imaging unit 100 under the current second exposure control, and the exposure time of the second imaging unit 101 under the current second exposure control corresponds to the three types of road signs different in brightness to allow all the road signs to be recognized.

According to the present embodiment, an appropriate exposure time is 50 ms for the electric sign, 7 ms for the sign internally illuminated, and 150 ms for the signboard sign. Further, the shortest exposure time for the electric sign that causes the flicker phenomenon is 10 ms, and the minimum exposure time in which the dark signboard sign can be recognized is 100 ms. Note that the appropriate exposure time may be set to vary depending on the characteristics of the lens, the sensitivity of the CMOS sensor, and the conditions (for example, time, area, weather, and season) of the external environment (outside environment).

In step S403, a determination is made whether the exposure time (first exposure time) used in step S401 is less than 10 ms. When the first exposure time is less than 10 ms (YES in step S403), the exposure time (second control amount) of the first imaging unit 100 is set to 50 ms, and the exposure time (third control amount) of the second imaging unit 101 is set to 150 ms (step S405).

When the first exposure time is equal to or greater than 10 ms in step S403 (NO in step S403), a determination is made whether the first exposure time is less than 100 ms (step S404). When the first exposure time is equal to or greater than 10 ms and less than 100 ms (YES in step S404), the exposure time (second control amount) of the first imaging unit 100 is set to 7 ms, and the exposure time (third control amount) of the second imaging unit 101 is set to 150 ms (step S406).

When the first exposure time is equal to or greater than 100 ms in step S404 (NO in step S404), the exposure time (second control amount) of the first imaging unit 100 is set to 7 ms, and the exposure time (third control amount) of the second imaging unit 101 is set to 50 ms (step S407).

Subsequently, in step S408, the exposure control switching unit 102 performs switching to cause the second exposure control unit 104 to perform exposure control of the first imaging unit 100 and the second imaging unit 101. The second exposure control unit 104 performs exposure control (second exposure control) of the first imaging unit 100 using the exposure time (second exposure time) set in step S405, S406 or S407 to capture an image, and further performs exposure control (second exposure control) of the second imaging unit 101 using the exposure time (third exposure time) set in step S405, S406 or S407 to capture an image. This imaging corresponds to imaging at the second imaging timing shown in FIG. 2.

The monocular image processing unit 105 performs the monocular processing of recognizing "sign B" illustrated in FIG. 2 from the image captured by the first imaging unit 100 in step S408, and further performs the monocular processing of recognizing "sign C" illustrated in FIG. 2 from the image captured by the second imaging unit 101 in step S408.

Subsequently, the steps S401 to S408 are repeated.

As described above, when the first exposure time is less than 10 ms (YES in step S403), the exposure time of the first imaging unit 100 is set to 50 ms, and the exposure time of the second imaging unit 101 is set to 150 ms. In this case, the exposure time (first exposure time) of the image captured in step S401 is less than 10 ms that is close to the optimal exposure time for the sign internally illuminated (7 ms according to the present embodiment), allowing the monocular image processing unit 105 to recognize the sign internally illuminated from the image captured in step S401. Further, the exposure time (second exposure time) of the image captured by the first imaging unit 100 in step S408 is 50 ms that is equal to the optimal exposure time for the electric sign (50 ms according to the present embodiment), allowing the monocular image processing unit 105 to recognize the electric sign from the image captured by the first imaging unit 100 in step S408. Further, the exposure time (third exposure time) of the image captured by the second imaging unit 101 in step S408 is 150 ms that is equal to the optimal exposure time for the signboard sign (150 ms according to the present embodiment), allowing the monocular image processing unit 105 to recognize the signboard sign from the image captured by the second imaging unit 101 in step S408.

Further, as described above, when the first exposure time is equal to or greater than 10 ms and less than 100 ms (NO in step S403 and YES in step S404), the exposure time of the first imaging unit 100 is set to 7 ms, and the exposure time of the second imaging unit 101 is set to 150 ms. In this case, the exposure time (first exposure time) of the image captured in step S401 is equal to or greater than 10 ms and less than 100 ms that is close to the optimal exposure time for the electric sign (50 ms according to the present embodiment), allowing the monocular image processing unit 105 to recognize the electric sign from the image captured in step S401. Further, the exposure time (second exposure time) of the image captured by the first imaging unit 100 in step S408 is 7 ms that is equal to the optimal exposure time for the sign internally illuminated (7 ms according to the present embodiment), allowing the monocular image processing unit 105 to recognize the sign internally illuminated from the image captured by the first imaging unit 100 in step S408. Further, the exposure time (third exposure time) of the image captured by the second imaging unit 101 in step S408 is 150 ms that is equal to the optimal exposure time for the signboard sign (150 ms according to the present embodiment), allowing the monocular image processing unit 105 to recognize the signboard sign from the image captured by the second imaging unit 101 in step S408.

Further, as described above, when the first exposure time is equal to or greater than 100 ms (NO in step S403 and NO in step S404), the exposure time of the first imaging unit 100 is set to 7 ms, and the exposure time of the second imaging unit 101 is set to 50 ms. In this case, the exposure time (first exposure time) of the image captured in step S401 is equal to or greater than 100 ms that is close to the optimal exposure time for the signboard sign (150 ms according to the present embodiment), allowing the monocular image processing unit 105 to recognize the signboard sign from the image captured in step S401. Further, the exposure time (second exposure time) of the image captured by the first imaging unit 100 in step S408 is 7 ms that is equal to the optimal exposure time for the sign internally illuminated (7 ms according to the present embodiment), allowing the monocular image processing unit 105 to recognize the sign internally illuminated from the image captured by the first imaging unit 100 in step S408. Further, the exposure time (third exposure time) of the image captured by the second imaging unit 101 in step S408 is 50 ms that is equal to the optimal exposure time for the electric sign (50 ms according to the present embodiment), allowing the monocular image processing unit 105 to recognize the electric sign from the image captured by the second imaging unit 101 in step S408.

Accordingly, it is possible to detect and recognize the three types of signs in a short time, while being compatible with detection processing of a vehicle or a pedestrian.

Note that, in the present embodiment, the description has been given of the example where a second exposure image is generated based on a first exposure image (the exposure time of the second exposure control is determined based on the exposure time of the first exposure control). However, the first exposure image may be determined based on the second exposure image (the exposure time of the first exposure control may be determined based on the exposure time of the second exposure control), and thus the present invention is limited to the example.

### Second embodiment

A description will be given of the second embodiment with reference to an example of a configuration for implementing the present invention while suppressing hardware cost.

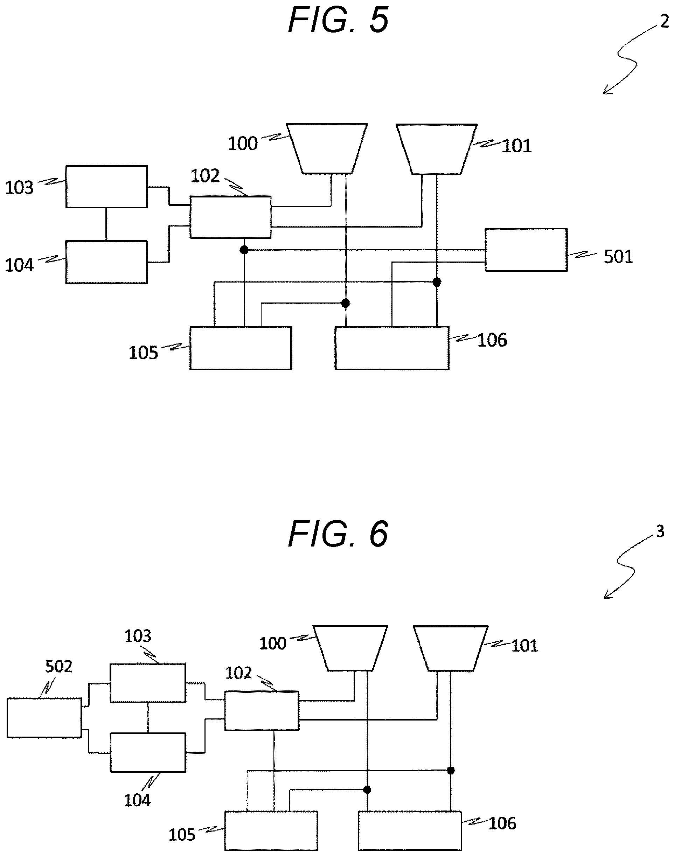

FIG. 5 is a block diagram of an image processing device 2 according to the second embodiment of the present invention. In FIG. 5, the same components as the components of the image processing device 1 illustrated in FIG. 1 are denoted by the same reference numerals, and no detailed description of the components will be given. The image processing device 2 illustrated in FIG. 5 includes a stereo processing determination unit 501 in addition to the components of the image processing device 1 illustrated in FIG. 1.

The stereo processing determination unit 501 determines whether to perform the stereo processing in accordance with the switching result from the exposure control switching unit 102. When the exposure control switching unit 102 enables an exposure setting for sign (performs switching to cause the second exposure control unit 104 to perform the exposure control of the first imaging unit 100 and the second imaging unit 101), the stereo processing determination unit 501 performs control to enable only the monocular image processing unit 105 and prevent the stereo image processing unit 106 from performing the stereo processing.

The use of the stereo processing determination unit 501 prevents the stereo processing from being performed at high speed more than necessary and thus makes it possible to suppress processing cost. For example, a configuration where the stereo processing is implemented on a field-programmable gate array (FPGA) makes a circuit small in scale and thus allows the stereo processing to be performed at low cost and low power consumption.

### Third embodiment

A description will be given of a third embodiment with reference to an example where processing is performed in accordance with the external environment.

FIG. 6 is a block diagram of an image processing device 3 according to the third embodiment of the present invention. In FIG. 6, the same components as the components of the image processing device 1 illustrated in FIG. 1 are denoted by the same reference numerals, and no detailed description of the components will be given. The image processing device 3 illustrated in FIG. 6 includes an external environment determination unit 502 in addition to the components of the image processing device 1 illustrated in FIG. 1.

The external environment determination unit 502 acquires external environments such as time, area, weather, and season and determines the current external environment from one or a combination of the external environments. The first exposure control unit 103 or the second exposure control unit 104 controls the first imaging unit 100 or the second imaging unit 101 using the optimal control amount of exposure control based on a determination result from the external environment determination unit 502. According to the first embodiment, the appropriate exposure time is 50 ms for the electric sign, 7 ms for the sign internally illuminated, and 150 ms for the signboard sign, whereas, according to the present embodiment, the external environment determination unit 502 determines the external environment and causes the first exposure control unit 103 or the second exposure control unit 104 to control the first imaging unit 100 or the second imaging unit 101 to make the appropriate exposure time shorter for bright conditions such as a snowy road at sunny daytime. Accordingly, it is possible to perform control suitable for the current conditions in accordance with to the external environment.

### Fourth embodiment

A description will be given of a fourth embodiment with reference to an example where processing is performed in accordance with a travel distance of the vehicle.

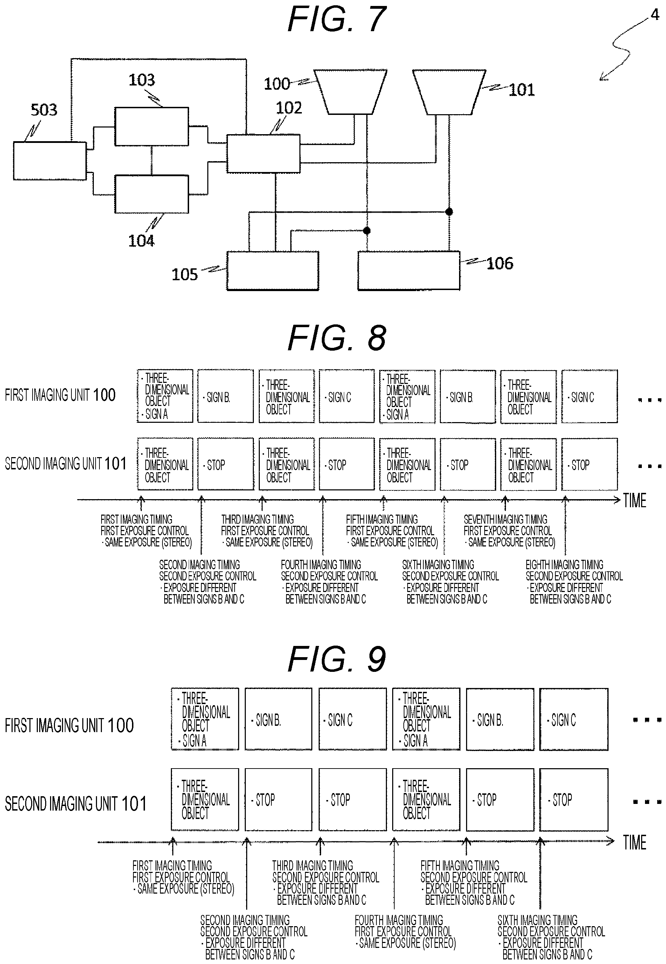

FIG. 7 is a block diagram of an image processing device 4 according to the fourth embodiment of the present invention. In FIG. 7, the same components as the components of the image processing device 1 illustrated in FIG. 1 are denoted by the same reference numerals, and no detailed description of the components will be given. The image processing device 4 illustrated in FIG. 7 includes a travel distance calculation unit 503 in addition to the components of the image processing device 1 illustrated in FIG. 1.

The travel distance calculation unit 503 calculates a travel distance of the vehicle equipped with the image processing device 4, and may be, for example, a vehicle speed sensor of a unit that configured to calculate the travel distance of the vehicle based on a change over time of the image captured by the first imaging unit 100 or the second imaging unit 101.

When the travel distance calculated by the travel distance calculation unit 503 is equal to or less than a predetermined amount, the second exposure control unit 104 performs exposure control of either the first imaging unit 100 or the second imaging unit 101 using the second control amount and the third control amount. This point will be described in detail with reference to FIG. 8.

FIG. 8 is a diagram illustrating examples of imaging timings of captured images to be used for the stereo processing and imaging timings of captured images to be used for the road sign recognition processing when the calculation result from the travel distance calculation unit 503 is less than the predetermined amount according to the fourth embodiment.

According to the present embodiment, when the calculation result from the travel distance calculation unit 503 exceeds the predetermined amount, the images to be used for the stereo processing and the images to be used for the road sign recognition processing are captured at the timings described with reference to FIG. 2. On the other hand, when the calculation result from the travel distance calculation unit 503 is equal to or less than the predetermined amount, the images are captured at the timings shown in FIG. 8. The meanings of the expressions shown in the frames in FIG. 8 are the same as the meanings of the expressions shown in FIG. 2. Further, in FIG. 8, "stop" shown in frames indicates that a corresponding imaging unit stops capturing an image.

A first imaging timing is an imaging timing of a captured image to be used for the stereo processing and the road sign recognition processing. At this first imaging timing, the first exposure control unit 103 performs exposure control (first exposure control) to cause the first imaging unit 100 and the second imaging unit 101 to capture images using the same control amount of exposure control that is the first control amount. The image captured by the first imaging unit 100 and the image captured by the second imaging unit 101 are used for the stereo processing, and the image capture by the first imaging unit 100 is used for the road sign recognition processing.

A second imaging timing subsequent to the first imaging timing is an imaging timing of a captured image to be used for the road sign recognition processing. At this second imaging timing, the second exposure control unit 104 performs exposure control (second exposure control) to cause the first imaging unit 100 to capture an image using the control amount of exposure control that is the second control amount. The image captured by the first imaging unit 100 is used for the road sign recognition processing.

A third imaging timing subsequent to the second imaging timing is an imaging timing of a captured image to be used for the stereo processing. At this third imaging timing, the first exposure control unit 103 performs exposure control (first exposure control) to cause the first imaging unit 100 and the second imaging unit 101 to capture images using the same control amount of exposure control that is the first control amount. The image captured by the first imaging unit 100 and the image captured by the second imaging unit 101 are used for the stereo processing.

A fourth imaging timing subsequent to the third imaging timing is an imaging timing of a captured image to be used for the road sign recognition processing. At this fourth imaging timing, the second exposure control unit 104 performs exposure control (second exposure control) to cause the first imaging unit 100 to capture an image using the control amount of exposure control that is the third control amount. The image captured by the first imaging unit 100 is used for the road sign recognition processing.

Subsequently, the same processing is repeated at the first imaging timing to the fourth imaging timing to cause images to be continuously captured.

Note that FIG. 8 shows that only the first imaging unit 100 captures images at the second imaging timing and the fourth imaging timing, but the present invention is not limited to this configuration, and a configuration where only the second imaging unit 101 captures images at the second imaging timing and the fourth imaging timing may be employed.

FIG. 9 is a diagram illustrating examples, different from the examples illustrated in FIG. 8, of imaging timings of captured images to be used for the stereo processing and imaging timings of captured images to be used for the road sign recognition processing when the calculation result from the travel distance calculation unit 503 is less than the predetermined amount according to the fourth embodiment. The meanings of the expressions shown in the frames in FIG. 9 are the same as the meanings of the expressions shown in FIG. 8.

A first imaging timing is an imaging timing of a captured image to be used for the stereo processing and the road sign recognition processing. At this first imaging timing, the first exposure control unit 103 performs exposure control (first exposure control) to cause the first imaging unit 100 and the second imaging unit 101 to capture images using the same control amount of exposure control that is the first control amount. The image captured by the first imaging unit 100 and the image captured by the second imaging unit 101 are used for the stereo processing, and the image capture by the first imaging unit 100 is used for the road sign recognition processing.

A second imaging timing subsequent to the first imaging timing is an imaging timing of a captured image to be used for the road sign recognition processing. At this second imaging timing, the second exposure control unit 104 performs exposure control (second exposure control) to cause the first imaging unit 100 to capture an image using the control amount of exposure control that is the second control amount. The image captured by the first imaging unit 100 is used for the road sign recognition processing.

The third imaging timing subsequent to the second imaging timing is an imaging timing of a captured image to be used for the road sign recognition processing. At this third imaging timing, the second exposure control unit 104 performs exposure control (second exposure control) to cause the first imaging unit 100 to capture an image using the control amount of exposure control that is the third control amount. The image captured by the first imaging unit 100 is used for the road sign recognition processing.

Subsequently, the same processing is repeated from the first imaging timing to the third imaging timing to cause images to be continuously captured.

Note that FIG. 9 shows that only the first imaging unit 100 captures images at the second imaging timing and the third imaging timing, but the present invention is not limited to this configuration, and a configuration where only the second imaging unit 101 captures images at the second imaging timing and the third imaging timing may be employed.

Note that, according to the fourth embodiment, when the calculation result from the travel distance calculation unit 503 exceeds the predetermined amount, images are captured at the timings shown in FIG. 2, and when the calculation result from the travel distance calculation unit 503 is less than the predetermined amount, images are captured at the timings shown in FIG. 8 or FIG. 9, but the present invention is not limited to this configuration, and a configuration where image are captured at the timings shown in FIG. 8 or FIG. 9 regardless of the calculation result from the travel distance calculation unit 503.

According to the fourth embodiment, when the calculation result from the travel distance calculation unit 503 is equal to or less than the predetermined amount, that is, when the speed of the vehicle is slow and accordingly the change of the outside is slow, the second imaging unit 101 is not controlled by the second exposure control unit 104 and thus can perform another processing during the idle time.

Further, according to the fourth embodiment, when the calculation result from the travel distance calculation unit 503 is equal to or less than the predetermined amount, that is, when the speed of the vehicle is slow and accordingly the change of the outside is slow, either the first imaging unit 100 or the second imaging unit 101 is controlled by the second exposure control unit 104 using the second control amount and the third control amount. Accordingly, under an environment where the first exposure control unit 103 and the second exposure control unit 104 alternately perform control, a period from a time when the first imaging unit 100 controlled by the second exposure control unit 104 is controlled by the first exposure control unit 103 to a time when the first imaging unit 100 is allowed to be controlled next by the first exposure control unit 103 is long compared to, for example, when the first imaging unit 100 is controlled by the second exposure control unit 104 using the second control amount and the second imaging unit 101 is controlled by the second exposure control unit 104 using the third control amount, and thus the stereo processing using an image captured under the control of the first exposure control unit 103 may be completed within the period, and, when the stereo processing is completed earlier, the idle time may be allocated to another processing, which allows software resources and hardware resources to be used more effectively. Further, a reduction in calculation load makes it possible to reduce power consumption.

Further, the present invention is not limited to the above-described configuration, and, for example, some or all of the control amounts of exposure control by the first exposure control unit 103 or the second exposure control unit 104 may be predetermined fixed values. This reduces the calculation load of the control amount and makes it possible to obtain the same effect as the above-described embodiments when the image processing device is used under a limited outside environment (for example, an environment where the vehicle is used only at sunny daytime in a specific area).

Note that, according to the above-described embodiments, the description has been given of the on-vehicle image processing device, but the present invention is not limited to this configuration, and the image processing device may be mounted on a model or robot or may be applied to an environment where the image processing device does not move but surroundings move.

### Reference Signs List

1 image processing device
2 image processing device
100 first imaging unit
101 second imaging unit
102 exposure control switching unit
103 first exposure control unit
104 second exposure control unit
105 monocular image processing unit
106 stereo image processing unit
501 stereo processing determination unit
502 external environment determination unit
503 travel distance calculation unit

## Claims

1. An image processing device, comprising:
a first imaging unit (100) for capturing an image and a second imaging unit (101) for capturing an image;
a first exposure control unit (103) for performing exposure control of the first imaging unit (100) and the second imaging unit (101) using a first exposure time;
a second exposure control unit (104) for performing exposure control of the first imaging unit (100) and the second imaging (101) using a second exposure time different from the first exposure time for the first imaging unit (100) and a third exposure time different from the first exposure time and the second exposure time, wherein each of the first, second and third exposure times is adapted to obtain captured images in which one of three types of road signs different in brightness can be recognized, wherein said three types of road signs include a reflective signboard sign, an electric sign, and an internally illuminated sign; and
an exposure control switching unit (102) for switching between performing exposure control by means of the first exposure control unit (103) and by means of the second exposure control unit (104);
a stereo image processing unit (106) configured to perform stereo processing using images obtained with the first exposure control unit (103) using the first exposure time,,
a monocular image processing unit (105) configured to perform monocular processing of an image obtained with the first imaging unit (100) using the first exposure time and an image obtained with the second imaging unit (100) using the second and third exposure time, respectively,
**characterized in that**
the exposure control switching unit (102) is configured to:
- switch from exposure control by means of the first exposure control unit (103) for capturing images to be processed by the stereo image processing unit (106)and to switch to exposure control by means of the second exposure control unit (104) for capturing images to be processed by the monocular image processing unit (105), wherein the first exposure time used by the first exposure control unit (103) is suitable for capturing images of a first of said three types of road sign, and the second and third control exposure tomes used by the second exposure control unit (104) are each suitable for capturing images of one of a second type and a third type of said three types of road sign; and
- **in that** the monocular processing unit (105) recognizes road signs using an image from one of the first and second image capture units captured using the first exposure time and images subsequently captured by the first and second image capture units using the second and third exposure time, respectively.

2. The image processing device according to claim 1, wherein the second exposure time and the third exposure time are determined based on the first exposure time.

3. The image processing device according to claim 1, wherein the exposure times used by the first and second imaging units (103, 104) are predetermined fixed values, respectively.

4. The image processing device according to claim 2, wherein
with a first threshold serving as a threshold of the exposure times defined to be less than a second threshold, when the first exposure time is greater than the first threshold and less than the second threshold, the second exposure control unit (104) takes a second exposure time less than the first threshold as the exposure time of the first imaging unit (100) and takes a third exposure time greater than the second threshold as the exposure time of the second imaging unit (101).

5. The image processing device according to claim 2, wherein
with a first threshold serving as a threshold of the exposure times defined to be less than a second threshold, when the first exposure time is greater than the second threshold, the second exposure control unit (104) takes a second exposure time less than the first threshold as the exposure time of the first imaging unit (100) and takes a third exposure time greater than the first threshold and less than the second threshold as the exposure time of the second imaging unit (101).

6. The image processing device according to claim 2, wherein
with a first threshold serving as a threshold of the exposure times defined to be less than a second threshold, when the first exposure time is less than the first threshold, the second exposure control unit (104) takes a second exposure time greater than the first threshold and less than the second threshold as the exposure time of the first imaging unit (100) and takes a third exposure time greater than the second threshold as the exposure time of the second imaging unit (101).

7. The image processing device according to claim 1, further comprising
an external environment determination unit (502) for determining an external environment, wherein
the first exposure control unit (103) and the second exposure control unit (104) determine one of the respective exposure times of the imaging units (100, 101) based on a determination result from the external environment determination unit (502).

8. The image processing device according to claim 1, further comprising
a travel distance calculation unit (503) for calculating a travel distance of a vehicle equipped with the image processing device (1), wherein
the second exposure control unit (104) performs exposure control of one of the first imaging unit (100) or the second imaging unit (101) using a second exposure time and, at another timing, a third exposure time while the other one of the first imaging unit (100) or the second imaging unit (101) is stopped when a calculation result from the travel distance calculation unit (503) is equal to or less than a predetermined amount.

## Patentansprüche

1. Eine Bildverarbeitungsvorrichtung, die Folgendes umfasst:
eine erste Abbildungseinheit (100) zum Aufnehmen eines Bildes und eine zweite Abbildungseinheit (101) zum Aufnehmen eines Bildes;
eine erste Belichtungssteuereinheit (103) zur Durchführung einer Belichtungssteuerung der ersten Abbildungseinheit (100) und der zweiten Abbildungseinheit (101) unter Verwendung einer ersten Belichtungszeit;
eine zweite Belichtungssteuereinheit (104) zum Durchführen einer Belichtungssteuerung der ersten Abbildungseinheit (100) und der zweiten Abbildungseinheit (101) unter Verwendung einer zweiten Belichtungszeit, die sich von der ersten Belichtungszeit für die erste Abbildungseinheit (100) unterscheidet, und einer dritten Belichtungszeit, die sich von der ersten Belichtungszeit und der zweiten Belichtungszeit unterscheidet, wobei jede der ersten, zweiten und dritten Belichtungszeiten so angepasst ist, dass erfasste Bilder erhalten werden, in denen eine von drei Arten von Straßenschildern, die sich in der Helligkeit unterscheiden, erkannt werden kann, wobei die drei Arten von Straßenschildern ein reflektierendes Hinweisschild, ein elektrisches Hinweisschild und ein von innen beleuchtetes Hinweisschild umfassen; und
eine Belichtungssteuerungs-Umschalteinheit (102) zum Umschalten zwischen der Durchführung der Belichtungssteuerung mittels der ersten Belichtungssteuereinheit (103) und mittels der zweiten Belichtungssteuereinheit (104);
eine Stereobildverarbeitungseinheit (106), die dazu ausgelegt ist, eine Stereoverarbeitung unter Verwendung von Bildern durchzuführen, die mit der ersten Belichtungssteuereinheit (103) unter Verwendung der ersten Belichtungszeit erhalten werden,
eine monokulare Bildverarbeitungseinheit (105), die dazu ausgelegt ist, eine monokulare Verarbeitung eines mit der ersten Abbildungseinheit (100) unter Verwendung der ersten Belichtungszeit erhaltenen Bildes und eines mit der zweiten Abbildungseinheit (100) unter Verwendung der zweiten bzw. dritten Belichtungszeit erhaltenen Bildes durchzuführen,
**dadurch gekennzeichnet, dass**
die Belichtungssteuerungs-Umschalteinheit (102) konfiguriert ist, zum:
- Umschalten von der Belichtungssteuerung mittels der ersten Belichtungssteuereinheit (103) zum Erfassen von Bildern, die von der Stereobildverarbeitungseinheit (106) zu verarbeiten sind, und Umschalten auf die Belichtungssteuerung mittels der zweiten Belichtungssteuereinheit (104) zum Erfassen von Bildern, die von der monokularen Bildverarbeitungseinheit (105) zu verarbeiten sind, wobei die erste Belichtungszeit, die von der ersten Belichtungssteuereinheit (103) verwendet wird, zum Erfassen von Bildern einer ersten der drei Arten von Straßenschildern geeignet ist, und die zweite und dritte Steuerbelichtungszeit, die von der zweiten Belichtungssteuereinheit (104) verwendet werden, jeweils zum Erfassen von Bildern einer zweiten Art und einer dritten Art der drei Arten von Straßenschildern geeignet sind; und
- dass die monokulare Bildverarbeitungseinheit (105) Straßenschilder unter Verwendung eines Bildes von einer der ersten und zweiten Bilderfassungseinheiten, das unter Verwendung der ersten Belichtungszeit aufgenommen wurde, und Bildern, die anschließend von der ersten und zweiten Bilderfassungseinheit unter Verwendung der zweiten bzw. dritten Belichtungszeit aufgenommen wurden, erkennt.

2. Bildverarbeitungsvorrichtung nach Anspruch 1, wobei die zweite Belichtungszeit und die dritte Belichtungszeit auf der Grundlage der ersten Belichtungszeit bestimmt werden.

3. Bildverarbeitungsvorrichtung nach Anspruch 1, wobei die von der ersten und zweiten Bilderfassungseinheit (103, 104) verwendeten Belichtungszeiten jeweils vorbestimmte feste Werte sind.

4. Die Bildverarbeitungsvorrichtung nach Anspruch 2, wobei
wenn die erste Belichtungszeit größer als der erste Schwellenwert und kleiner als der zweite Schwellenwert ist, die zweite Belichtungssteuereinheit (104) eine zweite Belichtungszeit, die kleiner als der erste Schwellenwert ist, als die Belichtungszeit der ersten Abbildungseinheit (100), verwendet, und eine dritte Belichtungszeit, die größer als der zweite Schwellenwert ist, als die Belichtungszeit der zweiten Abbildungseinheit (101) verwendet, wobei ein erster Schwellenwert als Schwellenwert der Belichtungszeiten dient, der so definiert ist, dass er kleiner als ein zweiter Schwellenwert ist.

5. Bildverarbeitungsvorrichtung nach Anspruch 2, wobei
wobei ein erster Schwellenwert als ein Schwellenwert der Belichtungszeiten dient, der so definiert ist, dass er kleiner als ein zweiter Schwellenwert ist, wenn die erste Belichtungszeit größer als der zweite Schwellenwert ist, die zweite Belichtungssteuereinheit (104) eine zweite Belichtungszeit, die kleiner als der erste Schwellenwert ist, als die Belichtungszeit der ersten Abbildungseinheit (100) verwendet und eine dritte Belichtungszeit, die größer als der erste Schwellenwert und kleiner als der zweite Schwellenwert ist, als die Belichtungszeit der zweiten Abbildungseinheit (101) verwendet.

6. Bildverarbeitungsvorrichtung nach Anspruch 2, wobei
wenn die erste Belichtungszeit kleiner als der erste Schwellenwert ist, die zweite Belichtungssteuereinheit (104) eine zweite Belichtungszeit, die größer als der erste Schwellenwert und kleiner als der zweite Schwellenwert ist, als Belichtungszeit der ersten Abbildungseinheit (100) verwendet und eine dritte Belichtungszeit, die größer als der zweite Schwellenwert ist, als Belichtungszeit der zweiten Abbildungseinheit (101) verwendet, wobei ein erster Schwellenwert als Schwellenwert der Belichtungszeiten dient, der so definiert ist, dass er kleiner als ein zweiter Schwellenwert ist.

7. Bildverarbeitungsvorrichtung nach Anspruch 1, ferner umfassend
eine Bestimmungseinheit (502) für die äußere Umgebung zum Bestimmen einer äußeren Umgebung, wobei
die erste Belichtungssteuereinheit (103) und die zweite Belichtungssteuereinheit (104) eine der jeweiligen Belichtungszeiten der Abbildungseinheiten (100, 101) auf der Grundlage eines Bestimmungsergebnisses der Bestimmungseinheit (502) für die äußere Umgebung bestimmen.

8. Bildverarbeitungsvorrichtung nach Anspruch 1, ferner umfassend
eine Fahrstreckenberechnungseinheit (503) zum Berechnen einer Fahrstrecke eines Fahrzeugs, das mit der Bildverarbeitungsvorrichtung (1) ausgestattet ist, wobei
die zweite Belichtungssteuereinheit (104) eine Belichtungssteuerung einer der ersten Abbildungseinheit (100) oder der zweiten Abbildungseinheit (101) unter Verwendung einer zweiten Belichtungszeit und zu einem anderen Zeitpunkt einer dritten Belichtungszeit durchführt, während die andere der ersten Abbildungseinheit (100) oder der zweiten Abbildungseinheit (101) gestoppt wird, wenn ein Berechnungsergebnis von der Fahrstreckenberechnungseinheit (503) gleich oder kleiner als ein vorbestimmter Betrag ist.

## Revendications

1. Dispositif de traitement d'images, comprenant :
une première unité (100) d'imagerie pour capturer une image et une deuxième unité (101) d'imagerie pour capturer une image ;
une première unité (103) de commande d'exposition pour effectuer une commande d'exposition de la première unité (100) d'imagerie et de la deuxième unité (101) d'imagerie en utilisant une première durée d'exposition ;
une deuxième unité (104) de commande d'exposition pour effectuer une commande d'exposition de la première unité (100) d'imagerie et de la deuxième unité (101) d'imagerie en utilisant une deuxième durée d'exposition différente de la première durée d'exposition pour la première unité (100) d'imagerie et une troisième durée d'exposition différente de la première durée d'exposition et de la deuxième durée d'exposition, dans lequel chacune des première, deuxième et troisième durées d'exposition est adaptée à obtenir des images capturées dans lesquelles un parmi trois types de panneaux de signalisation différents en luminosité peut être reconnu, dans lequel lesdits trois types de panneaux de signalisation incluent un panneau réfléchissant, un panneau électrique, et un panneau à éclairage intérieur ; et
une unité (102) de commutation de commande d'exposition pour commuter entre l'exécution d'une commande d'exposition au moyen de la première unité (103) de commande d'exposition et au moyen de la deuxième unité (104) de commande d'exposition ;
une unité (106) de traitement d'images stéréo configurée pour effectuer un traitement stéréo en utilisant des images obtenues avec la première unité (103) de commande d'exposition en utilisant la première durée d'exposition,
une unité (105) de traitement d'image monoculaire configurée pour effectuer un traitement monoculaire d'une image obtenue avec la première unité (100) d'imagerie en utilisant la première durée d'exposition et d'une image obtenue avec la deuxième unité (100) d'imagerie en utilisant la deuxième et la troisième durées d'exposition, respectivement,
**caractérisé en ce que**
l'unité (102) de commutation de commande d'exposition est configurée pour :
- commuter d'une commande d'exposition au moyen de la première unité (103) de commande d'exposition pour capturer des images devant être traitées par l'unité (106) de traitement d'images stéréo et commuter sur une commande d'exposition au moyen de la deuxième unité (104) de commande d'exposition pour capturer des images devant être traitées par l'unité (105) de traitement d'image monoculaire, dans lequel la première durée d'exposition utilisée par la première unité (103) de commande d'exposition est appropriée à capturer des images d'un premier desdits trois types de panneaux de signalisation, et les deuxième et troisième durées d'exposition utilisées par la deuxième unité (104) de commande d'exposition sont chacune appropriées à capturer des images d'un parmi un deuxième type et un troisième type desdits trois types de panneaux de signalisation ; et
- **en ce que** l'unité (105) de traitement d'image monoculaire reconnaît des panneaux de signalisation en utilisant une image provenant d'une parmi les première et deuxième unités de capture d'images capturée en utilisant la première durée d'exposition et des images subséquemment capturées par les première et deuxième unités de capture d'images en utilisant les deuxième et troisième durées d'exposition, respectivement.

2. Dispositif de traitement d'images selon la revendication 1, dans lequel la deuxième durée d'exposition et la troisième durée d'exposition sont déterminées sur la base de la première durée d'exposition.

3. Dispositif de traitement d'images selon la revendication 1, dans lequel les durées d'exposition utilisées par les première et deuxième unités (103, 104) d'imagerie sont des valeurs fixes prédéterminées, respectivement.

4. Dispositif de traitement d'images selon la revendication 2, dans lequel
avec un premier seuil servant comme un seuil des temps d'exposition défini pour être inférieur à un deuxième seuil, lorsque la première durée d'exposition est supérieure au premier seuil et inférieure au deuxième seuil, la deuxième unité (104) de commande d'exposition prend une deuxième durée d'exposition inférieure au premier seuil comme la durée d'exposition de la première unité (100) d'imagerie et prend une troisième durée d'exposition supérieure au deuxième seuil comme la durée d'exposition de la deuxième unité (101) d'imagerie.

5. Dispositif de traitement d'images selon la revendication 2, dans lequel
avec un premier seuil servant comme un seuil des temps d'exposition défini pour être inférieur à un deuxième seuil, lorsque la première durée d'exposition est supérieure au deuxième seuil, la deuxième unité (104) de commande d'exposition prend une deuxième durée d'exposition inférieure au premier seuil comme la durée d'exposition de la première unité (100) d'imagerie et prend une troisième durée d'exposition supérieure au premier seuil et inférieure au deuxième seuil comme la durée d'exposition de la deuxième unité (101) d'imagerie.

6. Dispositif de traitement d'images selon la revendication 2, dans lequel
avec un premier seuil servant comme un seuil des temps d'exposition défini pour être inférieur à un deuxième seuil, lorsque la première durée d'exposition est inférieure au premier seuil, la deuxième unité (104) de commande d'exposition prend une deuxième durée d'exposition supérieure au premier seuil et inférieure au deuxième seuil comme la durée d'exposition de la première unité (100) d'imagerie et prend une troisième durée d'exposition supérieure au deuxième seuil comme la durée d'exposition de la deuxième unité (101) d'imagerie.

7. Dispositif de traitement d'images selon la revendication 1, comprenant en outre
une unité (502) de détermination d'environnement extérieur pour déterminer un environnement extérieur, dans lequel
la première unité (103) de commande d'exposition et la deuxième unité (104) de commande d'exposition déterminent une des durées d'exposition respectives des unités (100, 101) d'imagerie sur la base d'un résultat de détermination provenant de l'unité (502) de détermination d'environnement extérieur.

8. Dispositif de traitement d'images selon la revendication 1, comprenant en outre
une unité (503) de calcul de distance de déplacement pour calculer une distance de déplacement d'un véhicule équipé du dispositif (1) de traitement d'images, dans lequel
la deuxième unité (104) de commande d'exposition effectue une commande d'exposition d'une de la première unité (100) d'imagerie ou de la deuxième unité (101) d'imagerie en utilisant une deuxième durée d'exposition et, à un autre moment, une troisième durée d'exposition tandis que l'autre de la première unité (100) d'imagerie ou de la deuxième unité (101) d'imagerie est stoppée lorsqu'un résultat de calcul provenant de l'unité (503) de calcul de distance de déplacement est égal ou inférieur à une quantité prédéterminée.
